# EUROPEAN PATENT APPLICATION

(11) **EP 3 659 985 A1**
(43) Date of publication of application: **03.06.2020**
(21) Application number: 18837173.6
(22) Date of filing: 23.07.2018
(51) Int. Cl.: C03C 27/12, B32B 17/10, B32B 27/30, C08K 5/053, C08K 5/105, C08L 31/04, C08L 33/04

(54) **RESIN FILM AND GLASS-PLATE-CONTAINING LAMINATE**

(30) Priority: 24.07.2017 JP 2017143116
(71) Applicant: Sekisui Chemical Co., Ltd., Osaka-shi, Osaka 530-8565 (JP)
(72) Inventor: ISHIKAWA, Yuki, Mishima-gun Osaka 618-0021 (JP); IWAMOTO, Tatsuya, Kouka-shi Shiga 528-8585 (JP); KAWADA, Shinji, Mishima-gun Osaka 618-0021 (JP); NAGAI, Yasuharu, Kouka-shi Shiga 528-8585 (JP); HANEDA, Satoshi, Mishima-gun Osaka 618-0021 (JP)
(74) Representative: Ter Meer Steinmeister & Partner
(86) International application number: PCT/JP2018/027474
(87) International publication number: WO 2019/021999

(57) **Abstract**

Provided is a resin film capable of enhancing both the sound insulating property and the transparency. A resin film according to the present invention has a one-layer structure or a two or more-layer structure, and includes a first layer containing polyvinyl acetate or a (meth)acryloyl polymer, and a compound having two or more hydroxyl groups, and the hydroxyl group in the compound having two or more hydroxyl groups is a secondary or tertiary alcoholic hydroxyl group or a phenolic hydroxyl group.

## Description

### TECHNICAL FIELD

The present invention relates to a resin film that is favorably used while it is bonded to other members such as a glass plate. Also, the present invention relates to a glass-plate-containing laminate prepared with the resin film.

### BACKGROUND ART

A glass-plate-containing laminate in which a resin film is bonded to a glass plate is known. Among glass-plate-containing laminates, laminated glass is broadly used.

Since the laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching a thermoplastic resin film between a pair of glass plates. Besides the laminated glass, the thermoplastic resin film is sometimes used while it is bonded to a member other than a glass plate.

The thermoplastic resin film used for the laminated glass is disclosed, for example, in the following Patent Documents 1, 2.

The following Patent Document 1 discloses a thermoplastic resin film containing 100 parts by mass of a thermoplastic resin or a thermosetting resin, and 10 to 1000 parts by mass of a compound represented by the following formula or the like. The thermoplastic resin may be polyvinyl acetal, polyvinyl carboxylate, and olefin-vinyl carboxylate copolymer.

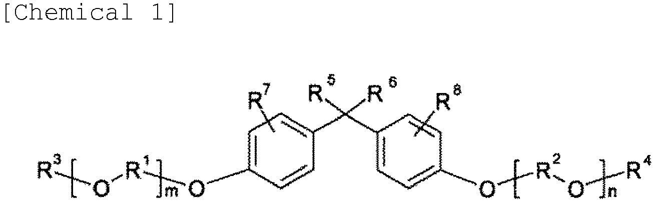

In the above formula, R¹ and R² each represent a dimethylene group optionally having an alkyl substituent, a trimethylene group optionally having an alkyl substituent, or a tetramethylene group optionally having an alkyl substituent. In the above formula, R³ and R⁴ each represent a hydrogen atom, an acyl group, or an alkyl group. In the above formula, R⁵ and R⁶ each represent a hydrogen atom or any organic group. In the above formula, R⁷ and R⁸ each represent any substituent that may exist or may not exist.

The following Patent Document 2 discloses a thermoplastic resin film containing 100 parts by mass of polyvinyl acetal, and 0.1 to 50 parts by mass of modified polyvinyl acetate having a carboxyl group on the side chain. The oxidation inhibitor may be a phenolic compound.

### Related Art Document

### Patent Document

Patent Document 1: WO 2016/158882 A1
Patent Document 2: JP 2009-161602 A

### SUMMARY OF THE INVENTION

### PROBLEMS TO BE SOLVED BY THE INVENTION

In a conventional thermoplastic resin film as described in Patent Documents 1, 2, it is sometimes difficult to sufficiently enhance the sound insulating property. Further, in a conventional thermoplastic resin film, the compatibility between the thermoplastic resin and the compound to be added is insufficient depending on the combination of the thermoplastic resin and the compound to be added, so that it is sometimes difficult to keep the transparency.

In a conventional thermoplastic resin film, it is difficult to enhance both of the sound insulating property and the transparency rather than either of them.

An object of the present invention is to provide a resin film capable of enhancing both the sound insulating property and the transparency. It is also an object of the present invention to provide a glass-plate-containing laminate prepared with the resin film.

### MEANS FOR SOLVING THE PROBLEMS

According to a broad aspect of the present invention, there is provided a resin film having a one-layer structure or a two or more-layer structure, the resin film including a first layer containing polyvinyl acetate or a (meth)acryloyl polymer, and a compound having two or more hydroxyl groups, the hydroxyl group in the compound having two or more hydroxyl groups being a secondary or tertiary alcoholic hydroxyl group or a phenolic hydroxyl group.

In a specific aspect of the resin film according to the present invention, when the first layer contains the polyvinyl acetate, the first layer contains a plasticizer.

In a specific aspect of the resin film according to the present invention, the first layer contains the polyvinyl acetate, and the polyvinyl acetate has a polymerization degree of 1500 or more and 10000 or less.

In a specific aspect of the resin film according to the present invention, the first layer contains the polyvinyl acetate, and in the first layer, a content of the compound having two or more hydroxyl groups relative to 100 parts by weight of the polyvinyl acetate is 10 parts by weight or more and 100 parts by weight or less.

In a specific aspect of the resin film according to the present invention, the first layer contains the (meth)acryloyl polymer.

In a specific aspect of the resin film according to the present invention, the first layer contains the (meth)acryloyl polymer and a plasticizer.

In a specific aspect of the resin film according to the present invention, the resin film includes a second layer containing a thermoplastic resin and a plasticizer, and the second layer is arranged on a first surface side of the first layer.

In a specific aspect of the resin film according to the present invention, the resin film includes a third layer containing a thermoplastic resin and a plasticizer, and the third layer is arranged on a second surface side opposite to the first surface side of the first layer.

In a specific aspect of the resin film according to the present invention, the resin film is a resin film to be used while being bonded to a glass plate.

According to a broad aspect of the present invention, there is provided a glass-plate-containing laminate including a first glass plate; and the above-described resin film, the resin film being bonded to the first glass plate.

In a specific aspect of the glass-plate-containing laminate according to the present invention, the glass-plate-containing laminate includes the first glass plate as a first lamination glass member; the resin film; and a second lamination glass member, and the resin film is bonded to the first glass plate, the resin film is bonded to the second lamination glass member, and the resin film is arranged between the first glass plate and the second lamination glass member.

### EFFECT OF THE INVENTION

The resin film according to the present invention has a one-layer structure or a two or more-layer structure. The resin film according to the present invention includes a first layer containing polyvinyl acetate or a (meth)acryloyl polymer, and a compound having two or more hydroxyl groups. In the resin film according to the present invention, the hydroxyl group in the compound having two or more hydroxyl groups is a secondary or tertiary alcoholic hydroxyl group or a phenolic hydroxyl group. In the resin film according to the present invention, since the aforementioned configuration is provided, it is possible to enhance both the sound insulating property and the transparency.

### BRIEF DESCRIPTION OF DRAWINGS

[Fig. 1] Fig. 1 is a sectional view schematically showing a resin film in accordance with a first embodiment of the present invention.
[Fig. 2] Fig. 2 is a sectional view schematically showing a resin film in accordance with a second embodiment of the present invention.
[Fig. 3] Fig. 3 is a sectional view schematically showing an example of a glass-plate-containing laminate prepared with the resin film shown in Fig. 1.
[Fig. 4] Fig. 4 is a sectional view schematically showing an example of a glass-plate-containing laminate prepared with the resin film shown in Fig. 2.

### MODE(S) FOR CARRYING OUT THE INVENTION

Hereinafter, the present invention will be described in detail.

### (Resin film)

The resin film according to the present invention has a one-layer structure or a two or more-layer structure.

The resin film according to the present invention includes a first layer containing polyvinyl acetate or a (meth)acryloyl polymer, and a compound having two or more hydroxyl groups. In the resin film according to the present invention, the hydroxyl group in the compound having two or more hydroxyl groups is a secondary or tertiary alcoholic hydroxyl group or a phenolic hydroxyl group.

In the resin film according to the present invention, since the aforementioned configuration is provided, it is possible to enhance both the sound insulating property and the transparency. In the resin film according to the present invention, when the glass-plate-containing laminate having the resin film is exposed to high temperature, discoloration can be suppressed, and high transparency can be maintained.

The resin film according to the present invention may have a one-layer structure, or may have a two or more-layer structure. The resin film according to the present invention may have a two-layer structure, may have a three-layer structure, and may have a three or more-layer structure. The resin film according to the present invention includes a first layer. The resin film according to the present invention may be a single-layered resin film including only a first layer and may be a multi-layered resin film including a first layer and other layer.

The resin film may have a two or more-layer structure and may include a second layer in addition to a first layer. It is preferred that the resin film further include a second layer. When the resin film includes the second layer, the second layer is arranged on a first surface side of the first layer.

The resin film may have a three or more-layer structure and may include a third layer in addition to a first layer and a second layer. It is preferred that the resin film further include a third layer. When the resin film includes the second layer and the third layer, the third layer is arranged on a second surface side opposite to the first surface of the first layer.

It is preferred that the surface opposite to the first layer side of the second layer be a surface on which a lamination glass member or a glass plate is laminated. The second surface that is opposite to the first surface (surface of second layer side) of the first layer may be a surface on which a lamination glass member or a glass plate is laminated. It is preferred that the surface opposite to the first layer side of the third layer be a surface on which a lamination glass member or a glass plate is laminated.

It is preferred that the resin film be a thermoplastic resin film. The thermoplastic resin film contains a thermoplastic resin in at least one layer.

In the resin film according to the present invention, the first layer may contain polyvinyl acetate, may contain a (meth)acryloyl polymer, may contain both polyvinyl acetate and a (meth)acryloyl polymer, and may be a copolymer of vinyl acetate and (meth)acryloyl.

In 100% by weight of the resin in the first layer, the content of the total of the polyvinyl acetate and the (meth)acryloyl polymer is preferably 50% by weight or more, more preferably 60% by weight or more, further preferably 70% by weight or more, especially preferably 80% by weight or more, most preferably 90% by weight or more. All the resin in the first layer may be either one of polyvinyl acetate and a (meth)acryloyl polymer, or may be a copolymer of vinyl acetate and (meth)acryloyl. All the resin in the first layer may be both polyvinyl acetate and a (meth)acryloyl polymer.

In 100% by weight of the thermoplastic resin in the first layer, the content of the total of the polyvinyl acetate and the (meth)acryloyl polymer is preferably 50% by weight or more, more preferably 60% by weight or more, further preferably 70% by weight or more, especially preferably 80% by weight or more, most preferably 90% by weight or more. All the thermoplastic resin in the first layer may be either one of polyvinyl acetate and a (meth)acryloyl polymer, or may be a copolymer of vinyl acetate and (meth)acryloyl. All the thermoplastic resin in the first layer may be both polyvinyl acetate and a (meth)acryloyl polymer.

Hereinafter, specific embodiments of the present invention will be described with reference to the drawings.

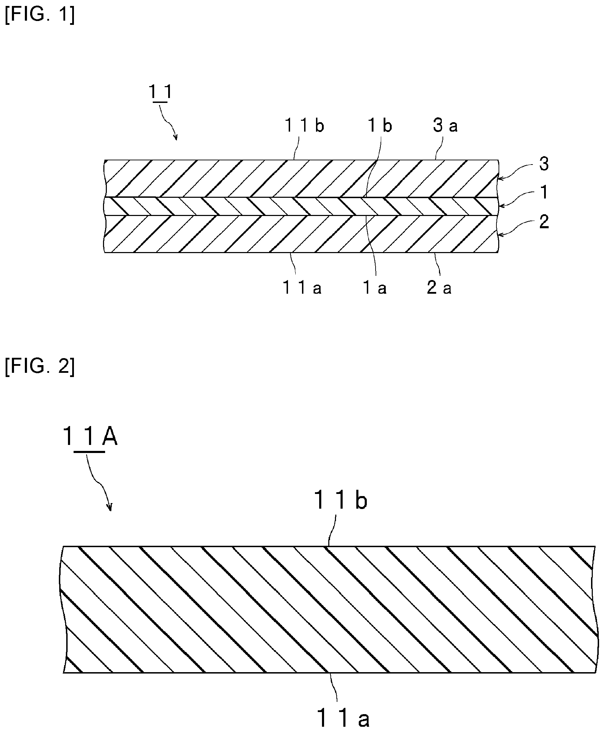

Fig. 1 is a sectional view schematically showing a resin film in accordance with a first embodiment of the present invention.

A resin film 11 shown in Fig. 1 is a multi-layered resin film having a two or more-layer structure. The resin film 11 is used for obtaining a glass-plate-containing laminate. It is preferred that the resin film 11 be an interlayer film for laminated glass. The resin film 11 includes a first layer 1, a second layer 2 and a third layer 3. The second layer 2 is arranged on a first surface side 1a of the first layer 1 to be layered thereon. The third layer 3 is arranged on a second surface 1b side at the opposite side of the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the resin film 11 has a multilayer structure (second layer 2/first layer 1/third layer 3) in which the second layer 2, the first layer 1, and the third layer 3 are layered in this order.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered. Examples of another layer include a layer containing polyethylene terephthalate and the like.

Fig. 2 is a sectional view schematically showing a resin film in accordance with a second embodiment of the present invention.

A resin film 11A shown in Fig. 2 is a single-layered resin film having a one-layer structure. The resin film 11A is a first layer. The resin film 11A is used for obtaining a glass-plate-containing laminate. It is preferred that the resin film 11A be an interlayer film for laminated glass.

Hereinafter, details of the resin film according to the present invention, the first layer, the second layer, and the third layer, and details of each ingredient contained in the resin film according to the present invention, the first layer, the second layer and the third layer will be described.

### (Polyvinyl acetate)

It is preferred that the resin film contain polyvinyl acetate. It is preferred that the first layer (including the case of single-layered resin film) contain polyvinyl acetate. The polyvinyl acetate is a thermoplastic resin. One kind of the polyvinyl acetate may be used alone and two or more kinds thereof may be used in combination.

In 100% by weight of the resin in the first layer, the content of the polyvinyl acetate is preferably 50% by weight or more, more preferably 60% by weight or more, further preferably 70% by weight or more, especially preferably 80% by weight or more, most preferably 90% by weight or more. All the resin in the first layer may be the polyvinyl acetate. In 100% by weight of the thermoplastic resin in the first layer, the content of the polyvinyl acetate is preferably 50% by weight or more, more preferably 60% by weight or more, further preferably 70% by weight or more, especially preferably 80% by weight or more, most preferably 90% by weight or more. All the thermoplastic resin in the first layer may be the polyvinyl acetate.

It is preferred that the polyvinyl acetate be a polymer of a polymerizable composition containing vinyl acetate and a monomer A having a functional group A1 having hydrogen bondability.

It is preferred that the polyvinyl acetate have a structural unit derived from vinyl acetate, and a structure derived from the monomer A.

The functional group A1 having hydrogen bondability is a hydroxyl group, an amide group, an amino group, and a carboxyl group. The hydroxyl group may be a phenolic hydroxyl group. From the viewpoint of effectively enhancing the sound insulating property, it is preferred that the functional group A1 be a hydroxyl group.

Examples of the monomer A include a monomer having a hydroxyl group, a monomer having an amide group, a monomer having an amino group, and a monomer having a carboxyl group. Examples of the monomer having a hydroxyl group include 3-methyl-3-buten-1-ol, ethylene glycol monovinyl ether, 2-hydroxyethyl (meth)acrylate, 2-hydroxypropyl (meth)acrylate, 4-hydroxybutyl (meth)acrylate, and diethylene glycol monovinyl ether. Examples of the monomer having an amide group include N,N-dimethylaminopropyl (meth)acrylamide, N,N-dimethyl (meth)acrylamide, (meth)acryloyl morpholine, N-isopropyl (meth)acrylamide, and N-hydroxyethyl (meth)acrylamide and the like. Examples of the monomer having an amino group include N-dialkylaminoalkyl (meth)acrylamide, and N,N-dialkylaminoalkyl (meth)acrylamide and the like. Examples of the monomer having a carboxyl group include 2-acryloyloxyethyl succinate and (meth)acrylic acid.

The method for polymerizing the polymerizable composition to synthesize the polyvinyl acetate is not particularly limited. Examples of the synthesizing method include a solution polymerization, suspension polymerization, UV polymerization and the like. The method for producing the polyvinyl acetate may be solution polymerization or suspension polymerization. The method for producing the polyvinyl acetate may be solution polymerization, or may be a method other than solution polymerization, or may be suspension polymerization.

From the viewpoint of increasing the transparency of the resin film, and effectively enhancing the sound insulating property in the resin film having increased transparency, the synthesizing method of the polyvinyl acetate is preferably solution polymerization. When the synthesizing method of the polyvinyl acetate is suspension polymerization, the Haze of the resin film (Haze measured in accordance with JIS K6714, of a glass-plate-containing laminate in which the aforementioned resin film is sandwiched between two sheets of clear glass) tends to be high. When the synthesizing method of the polyvinyl acetate is solution polymerization, the Haze of the resin film (Haze measured in accordance with JIS K6714, of a glass-plate-containing laminate in which the aforementioned resin film is sandwiched between two sheets of clear glass) is significantly low. The clear glass for use in measurement of Haze is preferably clear glass in conformity with JIS R3202:1996.

Even when the synthesizing method of the polyvinyl acetate is suspension polymerization, it is possible to make the Haze of the resin film (Haze measured in accordance with JIS K6714, of a glass-plate-containing laminate in which the aforementioned resin film is sandwiched between two sheets of clear glass) low by appropriately selecting a surfactant or a dispersant. The dispersant for use in synthesizing the polyvinyl acetate by suspension polymerization is preferably a high molecular dispersant that is compatible with an organic solvent, or a reactive surfactant from the viewpoint of adhesiveness and transparence. When the dispersant is a high molecule, the dispersant is less likely to migrate to another layer when the resin film is layered, so that it is possible to suppress deterioration in interlayer adhesive force caused by bleeding of the dispersant to the layer interface or glass interface. Examples of the high molecular dispersant include a block copolymer of ethylene oxide and propylene oxide. Examples of the reactive surfactant include a later-described polymerizable compound.

From the viewpoint of effectively enhancing the sound insulating property, the rate of the structural unit derived from the monomer A in 100% by mole of the total structural units of the polyvinyl acetate is preferably 0.1% by mole or more, more preferably 0.2% by mole or more, further preferably 0.4% by mole or more, especially preferably 0.5% by mole or more. From the viewpoint of effectively enhancing the sound insulating property, the rate of the structural unit derived from the monomer A in 100% by mole of the total structural units of the polyvinyl acetate is preferably 40% by mole or less, more preferably 30% by mole or less. It is preferred that the polyvinyl acetate contain the structural unit derived from the monomer A in this preferred rate.

From the viewpoint of effectively enhancing the sound insulating property, the rate of the structural unit derived from vinyl acetate in 100% by mole of the total structural units of the polyvinyl acetate is preferably 50% by mole or more, more preferably 60% by mole or more, further preferably 70% by mole or more, especially preferably 80% by mole or more, most preferably 85% by mole or more.

The polymerization degree of the polyvinyl acetate is preferably 1000 or more, more preferably 1500 or more, further preferably 2000 or more, especially preferably 3000 or more, and is preferably 10000 or less, more preferably 9000 or less, further preferably 8000 or less. When the polymerization degree of the polyvinyl acetate is the above lower limit or more and the above upper limit or less, the melt viscosity is moderate in obtaining a resin film and a glass-plate-containing laminate, and the productivity of the resin film is further enhanced. From the viewpoint of further enhancing the productivity, the polymerization degree of the polyvinyl acetate is more preferably 3000 or more, and is more preferably 8000 or less.

The polymerization degree of the polyvinyl acetate is determined by a method in accordance with JIS K6725 "Testing methods for polyvinyl acetate".

It is preferred that the polyvinyl acetate do not contain a structural unit derived from ethylene, or contain a structural unit derived from ethylene in a rate of 30% by weight or less in 100 % by weight of the total structural units of polyvinyl acetate. In 100% by weight of the total structural units of the polyvinyl acetate, the structural unit derived from ethylene is more preferably 20% by weight or less, further preferably 5% by weight or less.

It is preferred that the polyvinyl acetate not be ethylene-vinyl acetate copolymer.

The polyvinyl acetate may be a polymer of a copolymer composition of vinyl acetate and a polymerizable compound other than ethylene and vinyl acetate. It is preferred that the copolymer composition contain vinyl acetate as a main ingredient. Examples of the polymerizable compound other than vinyl acetate and ethylene include 2-methyl-2-propen-1-ol, 2-methyl-3-buten-2-ol, 3-methyl-2-buten-1-ol, 3-methyl-3-buten-1-ol, 4-ethenylphenol, 2-methylcrotonic acid, vinyl propionate, vinyl pivalate, vinyl benzoate, and (meth)acryloyl monomer.

### ((Meth)acryloyl polymer)

It is preferred that the resin film contain a (meth)acryloyl polymer. It is preferred that the first film contain a (meth)acryloyl polymer. The (meth)acryloyl polymer is a thermoplastic resin. One kind of the (meth)acryloyl polymer may be used alone, and two or more kinds thereof may be used in combination.

In 100% by weight of the resin in the first layer, the content of the (meth)acryloyl polymer is preferably 50% by weight or more, more preferably 60% by weight or more, further preferably 70% by weight or more, especially preferably 80% by weight or more, most preferably 90% by weight or more. All the resin in the first layer may be the (meth)acryloyl polymer. In 100% by weight of the thermoplastic resin in the first layer, the content of the (meth)acryloyl polymer is preferably 50% by weight or more, more preferably 60% by weight or more, further preferably 70% by weight or more, especially preferably 80% by weight or more, most preferably 90% by weight or more. All the thermoplastic resin in the first layer may be the (meth)acryloyl polymer.

From the viewpoint of enhancing the sound insulating property more effectively, it is preferred that the (meth)acryloyl monomer constituting the (meth)acryloyl polymer be a (meth)acryl ester having a cyclic ether structure, a (meth)acrylic ester having an aromatic ring, or an acyclic (meth)acrylic ester having 6 or less carbon atoms in the side chain.

Examples of the (meth)acrylic ester having a cyclic ether structure include glycidyl (meth)acrylate, (3-propyloxetane-3-yl)methyl (meth)acrylate, (3-ethyloxetane-3-yl)methyl (meth)acrylate, (3-butyloxetane-3-yl)methyl (meth)acrylate, (3-ethyloxetane-3-yl)ethyl (meth)acrylate, (3-ethyloxetane-3-yl)propyl (meth)acrylate, (3-ethyloxetane-3-yl)butyl (meth)acrylate, (3-ethyloxetane-3-yl)pentyl (meth)acrylate, (3-ethyloxetane-3-yl)hexyl (meth)acrylate; γ-butyrolactone (meth)acrylate, (2,2-dimethyl-1,3-dioxolane-4-yl)methyl (meth)acrylate, (2-methyl-2-ethyl-1,3-dioxolane-4-yl)methyl (meth)acrylate, (2-methyl-2-isobutyl-1,3-dioxolane-4-yl)methyl (meth)acrylate, (2-cyclohexyl-1,3-dioxolane-4-yl)methyl (meth)acrylate, cyclic trimethylol propane formal acrylate, and (meth)acryloyl morpholine and the like. From the viewpoint of enhancing the sound insulating property more effectively, it is especially preferred that the (meth)acrylic ester having a cyclic ether structure be cyclic trimethylol propane formal acrylate.

Examples of the (meth)acrylic ester having an aromatic ring include benzyl acrylate, phenoxypolyethyleneglycol acrylate and hydroxyphenoxypropyl acrylate.

Examples of the acyclic (meth)acrylic ester having 6 or less carbon atoms in the side chain include methyl (meth)acrylate, ethyl (meth)acrylate, propyl (meth)acrylate, and butyl (meth)acrylate and the like. For obtaining the effect of the present invention more effectively, it is preferred that the blending amount of the acyclic (meth)acrylic ester having 6 or less carbon atoms in the side chain in 100% by weight of the (meth)acryloyl monomer be less than 20% by weight.

By using the above-described preferred compound as the (meth)acryloyl monomer, the balance of the characteristics of the resin film such as the sound insulating property becomes more favorable.

Examples of the (meth)acryloyl monomer include besides the compounds as recited above, diethyleneglycol monoethylether (meth)acrylate, isobornyl (meth)acrylate, 3-methoxybutyl (meth)acrylate, cyclohexyl (meth)acrylate; ethylene glycol di(meth)acrylate, diethylene glycol di(meth)acrylate, tetraethylene glycol di(meth)acrylate, 1,6-hexane diol dimethacrylate, 1,9-nonane diol diacrylate, polytetramethylene glycol di(meth)acrylate, neopentyl glycol di(meth)acrylate, 1,3-butylene glycol di(meth)acrylate, 2,2-bis[4-(methacryloxyethoxy)phenyl]propane di(meth)acrylate; trimethylolpropane triacrylate, pentaerythritol tetramethacrylate, tri(2-acryloyloxyethyl)phosphate, tetramethylol methane tri(meth)acrylate, and tetramethylol propane tetra(meth)acrylate. One kind of the compound may be used alone and two or more kinds thereof may be used in combination.

From the viewpoint of effectively enhancing the sound insulating property, the weight average molecular weight of the (meth)acryloyl polymer is preferably 250000 or more, more preferably 300000 or more, further preferably 400000 or more, especially preferably 500000 or more. From the viewpoint of effectively increasing the transparency, the weight average molecular weight of the (meth)acryloyl polymer is preferably 2000000 or less.

The weight average molecular weight refers to a weight average molecular weight, calculated on the polystyrene equivalent basis, measured by gel permeation chromatography (GPC).

The method for synthesizing the (meth)acryloyl polymer is not particularly limited. Examples of the synthesizing method include a solution polymerization, suspension polymerization, UV polymerization and the like. The method for producing the (meth)acryloyl polymer may be solution polymerization or suspension polymerization. The method for producing the (meth)acryloyl polymer may be solution polymerization, or may be a method other than solution polymerization, or may be suspension polymerization.

From the viewpoint of increasing the transparency of the resin film, and effectively enhancing the sound insulating property in the resin film having increased transparency, the synthesizing method of the (meth)acryloyl polymer is preferably solution polymerization or UV polymerization. When the synthesizing method of the (meth)acryloyl polymer is suspension polymerization, the Haze of the resin film (Haze measured in accordance with JIS K6714, of a glass-plate-containing laminate in which the aforementioned resin film is sandwiched between two sheets of clear glass) tends to be high. When the synthesizing method of the (meth)acryloyl polymer is solution polymerization or UV polymerization, the Haze of the resin film (Haze measured in accordance with JIS K6714, of a glass-plate-containing laminate in which the aforementioned resin film is sandwiched between two sheets of clear glass) is significantly low.

Even when the synthesizing method of the (meth)acryloyl polymer is suspension polymerization, it is possible to make the Haze of the resin film (Haze measured in accordance with JIS K6714, of a glass-plate-containing laminate in which the aforementioned resin film is sandwiched between two sheets of clear glass) low by appropriately selecting a surfactant or a dispersant. The dispersant for use in synthesizing the (meth)acryloyl polymer by suspension polymerization is preferably a high molecular dispersant that is compatible with an organic solvent, or a reactive surfactant from the viewpoint of adhesiveness and transparence. When the dispersant is a high molecule, the dispersant is less likely to migrate to another layer when the resin film is layered, so that it is possible to suppress deterioration in interlayer adhesive force caused by bleeding of the dispersant to the layer interface or glass interface. Examples of the high molecular dispersant include a block copolymer of ethylene oxide and propylene oxide.

The (meth)acryloyl polymer also includes a copolymer of a (meth)acryloyl monomer, and a polymerizable compound (copolymerizing component) other than a (meth)acryloyl monomer. The polymerizable composition may contain a polymerizable compound other than a (meth)acryloyl monomer lacking a functional group having hydrogen bondability on the side chain. It is preferred that the polymerizable composition contain a (meth)acryloyl monomer lacking a functional group having hydrogen bondability on the side chain as a polymerizable compound as a main ingredient. In 100% by mole of the total structural units (skeleton) of the (meth)acryloyl polymer, the rate of the structural unit (skeleton) derived from the (meth)acryloyl monomer lacking a functional group having hydrogen bondability on the side chain is preferably 50% by mole or more, more preferably 60% by mole or more. In 100% by mole of the total structural units (skeleton) of the (meth)acryloyl polymer, the rate of the structural unit (skeleton) derived from the (meth)acryloyl monomer lacking a functional group having hydrogen bondability on the side chain is further preferably 70% by mole or more, especially preferably 80% by mole or more, most preferably 90% by mole or more. Examples of the polymerizable compound other than the (meth)acryloyl monomer lacking a functional group having hydrogen bondability on the side chain include vinyl acetate, a styrene compound and an isoprene compound.

Examples of the polymerizable compound other than the (meth)acryloyl monomer lacking a functional group having hydrogen bondability on the side chain include styrene, vinyl benzoate, and allyl benzoate. By using such a polymerizable compound, when the first layer is layered on other layer or a lamination glass member it becomes easy to adjust the refractive index with the other layer or the lamination glass member, and optical strain is suppressed.

Other examples of the polymerizable compound other than the (meth)acryloyl monomer lacking a functional group having hydrogen bondability on the side chain include polyoxyethylenestyrenated propenylphenylether sulfate ester ammonium, polyoxyethylenenonylpropenylphenylether sulfate ester ammonium, polyoxyethylene-1-(allyloxymethyl)alkylether sulfate ester ammonium, polyoxyethylenestyrenated propenylphenylether, and polyoxyethylene-1-(allyloxymethyl)alkylether. By using such a polymerizable compound as a reactive surfactant, a resin film having high transparency can be obtained even by suspension polymerization.

### (Thermoplastic resin other than polyvinyl acetate and (meth)acryloyl polymer)

It is preferred that the resin film contain a thermoplastic resin. It is preferred that the resin film contain a polyvinyl acetal resin. From the viewpoint of effectively enhancing the adhesiveness, the second layer preferably contains a thermoplastic resin (hereinafter, sometimes referred to as thermoplastic resin (2)), and more preferably contains a polyvinyl acetal resin (hereinafter, sometimes described as polyvinyl acetal resin (2)). From the viewpoint of effectively enhancing the adhesiveness, it is preferred that the third layer contain a thermoplastic resin (hereinafter, sometimes referred to as thermoplastic resin (3)), and it is more preferred that the third layer contain a polyvinyl acetal resin (hereinafter, sometimes described as polyvinyl acetal resin (3)).

The thermoplastic resin (2) and the thermoplastic resin (3) may be the same or different from each other. One kind of each of the thermoplastic resin (2) and the thermoplastic resin (3) may be used alone, and two or more kinds thereof may be used in combination.

In 100% by weight of the thermoplastic resin in the second layer, the content of the polyvinyl acetal resin (2) is preferably 50% by weight or more, more preferably 60% by weight or more, further preferably 70% by weight or more, especially preferably 80% by weight or more, most preferably 90% by weight or more. All the thermoplastic resin in the second layer may be the polyvinyl acetal resin (2).

In 100% by weight of the thermoplastic resin in the third layer, the content of the polyvinyl acetal resin (3) is preferably 50% by weight or more, more preferably 60% by weight or more, further preferably 70% by weight or more, especially preferably 80% by weight or more, most preferably 90% by weight or more. All the thermoplastic resin in the third layer may be the polyvinyl acetal resin (3).

Examples of the thermoplastic resin include a polyvinyl acetal resin, an ethylene-vinyl acetate copolymer, an ethylene-acrylic acid copolymer, a polyurethane resin, a polyvinyl alcohol resin, a polyvinyl acetate, a polyester resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, and is preferably 5000 or less, more preferably 4000 or less, further preferably 3500 or less. When the average polymerization degree is the above lower limit or more, the penetration resistance of the glass-plate-containing laminate is further enhanced. When the average polymerization degree is the above upper limit or less, formation of a resin film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the resin film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde, or isobutyraldehyde, and further preferably n-butyraldehyde. One kind of the aldehyde may be used alone, and two or more kinds thereof may be used in combination.

Each of the contents of the hydroxyl group of the polyvinyl acetal resin (2) and the polyvinyl acetal resin (3) is preferably 25% by mole or more, more preferably 28% by mole or more, further preferably 30% by mole or more. Each of the contents of the hydroxyl group of the polyvinyl acetal resin (2) and the polyvinyl acetal resin (3) is preferably 38% by mole or less, more preferably 37% by mole or less. When the content of the hydroxyl group is the above lower limit or more, the adhesive force of the resin film further increases. When the content of the hydroxyl group is the above upper limit or less, the flexibility of the resin film is enhanced and the handling of the resin film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree of each of the polyvinyl acetal resin (2) and the polyvinyl acetal resin (3) is preferably 0.01% by mole or more, and more preferably 0.5% by mole or more and is preferably 10% by mole or less, and more preferably 2% by mole or less. When the acetylation degree is the above lower limit or more, the compatibility between the polyvinyl acetal resin and a plasticizer is enhanced. When the acetylation degree is the above upper limit or less, with regard to the resin film and the glass-plate-containing laminate, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of each of the polyvinyl acetal resin (2) and the polyvinyl acetal resin (3) (the butyralization degree in the case of a polyvinyl butyral resin) is preferably 55% by mole or more, and more preferably 60% by mole or more and is preferably 75% by mole or less, and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

It is preferred that the polyvinyl acetal resin (1) be a polyvinyl butyral resin. It is preferred that the polyvinyl acetal resin (2) be a polyvinyl butyral resin. It is preferred that the polyvinyl acetal resin (3) be a polyvinyl butyral resin.

### (Plasticizer)

It is preferred that the resin film contain a plasticizer. It is preferred that the first layer (including the case of single-layered resin film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the penetration resistance is further improved, and the adhesive force of a layer containing the polyvinyl acetal resin and the plasticizer to a lamination glass member or another layer is moderately increased. The plasticizer is not particularly limited. The plasticizer (1), the plasticizer (2) and the plasticizer (3) may be the same or different from one another. One kind of each of the plasticizer (1), the plasticizer (2) and the plasticizer (3) may be used alone, and two or more kinds thereof may be used in combination.

From the viewpoint of effectively exerting the effect of the present invention, when the first layer contains polyvinyl acetate, it is preferred that the first layer contain a plasticizer. From the viewpoint of effectively exerting the effect of the present invention, when the first layer contains a (meth)acryloyl polymer, it is preferred that the first layer contain a plasticizer. When the first layer contains a (meth)acryloyl polymer, the first layer may not contain a plasticizer.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 10 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dibutyl maleate, bis(2-butoxyethyl) adipate, dibutyl adipate, diisobutyl adipate, 2,2-butoxyethoxyethyl adipate, benzoic acid glycol ester, adipic acid 1,3-butyleneglycol polyester, dihexyl adipate, dioctyl adipate, hexyl cyclohexyl adipate, a mixture of heptyl adipate and nonyl adipate, diisononyl adipate, diisodecyl adipate, heptyl nonyl adipate, tributyl citrate, tributyl acetylcitrate, diethyl carbonate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

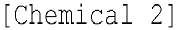

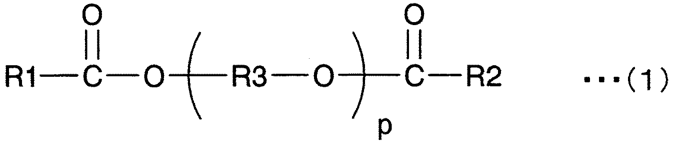

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 4 to 10 carbon atoms.

When the first layer contains the polyvinyl acetate, the first layer preferably contains an adipic acid ester as the plasticizer, and especially preferably contains bis(2-buthoxyethyl) adipate, or dibutyl adipate.

In the above first layer, the content of the plasticizer (1) relative to 100 parts by weight of the total of the polyvinyl acetate and the (meth)acryloyl polymer is referred to as a content (1). The content (1) is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1) is the above lower limit or more, the flexibility of the resin film is enhanced and the handling of the resin film is facilitated. When the content (1) is the above upper limit or less, the penetration resistance of the glass-plate-containing laminate is further enhanced.

In the first layer, the content of the plasticizer (1) relative to 100 parts by weight of the polyvinyl acetate is referred to as a content (1a). The content (1a) is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1a) is the above lower limit or more, the flexibility of the resin film is enhanced and the handling of the resin film is facilitated. When the content (1a) is the above upper limit or less, the penetration resistance of the glass-plate-containing laminate is further enhanced.

When the first layer contains the (meth)acryloyl polymer, it is preferred that the first layer contain an organic ester plasticizer as the plasticizer.

In the above first layer, the content of the plasticizer (1) relative to 100 parts by weight of the (meth)acryloyl polymer is referred to as a content (1b). The content (1b) may be 0 parts by weight or more (including uncontained) or may be more than 0 parts by weight, and is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1b) is the above lower limit or more, the flexibility of the resin film is enhanced and the handling of the resin film is facilitated. When the content (1b) is the above upper limit or less, the penetration resistance of the glass-plate-containing laminate is further enhanced.

In the second layer, the content of the plasticizer (2) relative to 100 parts by weight of the thermoplastic resin (2) (100 parts by weight of the polyvinyl acetal resin (2) when the thermoplastic resin (2) is the polyvinyl acetal resin (2)) is referred to as a content (2). In the third layer, the content of the plasticizer (3) relative to 100 parts by weight of the thermoplastic resin (3) (100 parts by weight of polyvinyl acetal resin (3) when the thermoplastic resin (3) is a polyvinyl acetal resin (3)) is referred to as a content (3). Each of the content (2) and the content (3) is preferably 10 parts by weight or more, more preferably 15 parts by weight or more, and is preferably 40 parts by weight or less, and more preferably 35 parts by weight or less. When the content (2) and the content (3) are the above lower limit or more, the flexibility of the resin film is enhanced and the handling of the resin film is facilitated. When the content (2) and the content (3) are the above upper limit or less, the flexural rigidity is further enhanced.

### (Compound having two or more hydroxyl groups)

The resin film contains a compound having two or more hydroxyl groups (hereinafter, sometimes described as Compound A). The first layer contains the Compound A. One kind of the Compound A may be used alone and two or more kinds thereof may be used in combination.

The present inventors found that a resin film having high sound insulating property and transparency is obtained by using the aforementioned specific Compound A when polyvinyl acetate or a (meth)acryloyl polymer is contained as a resin such as a thermoplastic resin.

The hydroxyl group in the Compound A is a secondary or tertiary alcoholic hydroxyl group, or a phenolic hydroxyl group. The compound having two or more hydroxyl groups has a secondary alcoholic hydroxyl group, a tertiary alcoholic hydroxyl group or a phenolic hydroxyl group. The secondary alcoholic hydroxyl group is a group in which two carbon atoms are bound to the carbon atom that is bound to the hydroxyl group. The tertiary alcoholic hydroxyl group is a group in which three carbon atoms are bound to the carbon atom that is bound to the hydroxyl group. The phenolic hydroxyl group is a group in which a hydroxyl group is bound to a benzene ring. In the phenolic hydroxyl group, a group other than the hydroxyl group may be bound to the benzene ring.

Examples of the Compound A include compounds having a secondary or tertiary alcoholic hydroxyl group such as 2,2-bis(4-polyoxypropyleneoxyphenyl)propane, trimethylolpropanetrioxypropyleneether, pentaerythritoloxypropyleneether, and propyleneglycol adduct of 2-butyl-2-ethyl-1,3-hydroxypropane; and compounds having a phenolic hydroxyl group such as 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, and 1,3,5-trimethyl-2,4,6-tris(3,5-di-t-butyl-4-hydroxybenzyl) benzene.

The resin film and the first layer may contain a compound having two or more secondary or tertiary alcoholic hydroxyl groups, or may contain a compound having two or more phenolic hydroxyl groups as the Compound A.

In the first layer, the content of the Compound A relative to 100 parts by weight of the polyvinyl acetate, is preferably 5 parts by weight or more, more preferably 10 parts by weight or more, further preferably 20 parts by weight or more, and is preferably 200 parts by weight or less, more preferably 100 parts by weight or less, further preferably 70 parts by weight or less. When the content of the Compound A is the aforementioned lower limit or more and the aforementioned upper limit or less, the sound insulating property and the transparency are further enhanced.

In the first layer, the content of the Compound A relative to 100 parts by weight of the (meth)acryloyl polymer is preferably 5 parts by weight or more, more preferably 10 parts by weight or more, further preferably 20 parts by weight or more, and is preferably 200 parts by weight or less, more preferably 100 parts by weight or less, further preferably 70 parts by weight or less. When the content of the Compound A is the aforementioned lower limit or more and the aforementioned upper limit or less, the sound insulating property and the transparency are further enhanced.

The content of the Compound A is a total content of a compound having two or more secondary or tertiary alcoholic hydroxyl groups, and a compound having two or more phenolic hydroxyl groups.

### (Heat shielding substance)

The resin film may contain a heat shielding substance (heat shielding compound). One kind of the heat shielding substance may be used alone, and two or more kinds thereof may be used in combination.

It is preferred that the heat shielding substance contain a phthalocyanine compound, a naphthalocyanine compound, or an anthracyanine compound (hereinafter, these components are sometimes described as Ingredient X) or contain heat shielding particles. In this case, the heat shielding compound may be constituted of both of the Ingredient X and the heat shielding particles.

### Ingredient X:

It is preferred that the resin film contain the Ingredient X that is a phthalocyanine compound, a naphthalocyanine compound, or an anthracyanine compound. It is preferred that the first layer (including the case of single-layered resin film) contain the Ingredient X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

From the viewpoint of further enhancing the heat shielding properties of the resin film and the glass-plate-containing laminate, it is preferred that the Ingredient X be phthalocyanine, a derivative of phthalocyanine, naphthalocyanine or a derivative of naphthalocyanine, and it is more preferred that the Ingredient X be phthalocyanine or a derivative of phthalocyanine.

In 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the resin film contain heat shielding particles. It is preferred that the first layer (including the case of single-layered resin film) contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of the glass-plate-containing laminate, it is more preferred that the heat shielding particles be metal oxide particles. It is preferred that the heat shielding particle be a particle (a metal oxide particle) formed from an oxide of a metal.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the glass-plate-containing laminate, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

In 100% by weight of a layer containing the heat shielding particles (a first layer, a second layer, or a third layer), the content of the heat shielding particles is preferably 0.01% by weight or more, more preferably 0.1% by weight or more, further preferably 1% by weight or more, especially preferably 1.5% by weight or more. In 100% by weight of a layer containing the heat shielding particles (a first layer, a second layer, or a third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding properties are sufficiently enhanced and the visible light transmittance is sufficiently enhanced.

### (Metal salt)

It is preferred that the resin film contain an alkali metal salt, an alkaline earth metal salt or a magnesium salt (hereinafter, these are sometimes described as Metal salt M). It is preferred that the first layer (including the case of single-layered resin film) contain the Metal salt M. It is preferred that the second layer contain the Metal salt M. It is preferred that the third layer contain the Metal salt M. By the use of the Metal salt M, controlling the adhesivity between the resin film and a lamination glass member or the adhesivity between respective layers in the resin film is facilitated. One kind of the Metal salt M may be used alone, and two or more kinds thereof may be used in combination.

It is preferred that the Metal salt M contain Li, Na, K, Rb, Cs, Mg, Ca, Sr or Ba. It is preferred that the metal salt included in the resin film contain K or Mg.

Moreover, it is more preferred that the Metal salt M be an alkali metal salt of an organic acid with 2 to 16 carbon atoms, an alkaline earth metal salt of an organic acid with 2 to 16 carbon atoms, or a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in a layer containing the Metal salt M (a first layer, a second layer, or a third layer) is preferably 5 ppm or more, more preferably 10 ppm or more, and further preferably 20 ppm or more. The total of the contents of Mg and K in a layer containing the Metal salt M (a first layer, a second layer, or a third layer) is preferably 300 ppm or less, more preferably 250 ppm or less, and further preferably 200 ppm or less. When the total of the contents of Mg and K is the above lower limit or more and the above upper limit or less, the adhesivity between the resin film and a lamination glass member or the adhesivity between respective layers in the resin film can be further well controlled.

### (Ultraviolet ray screening agent)

The resin film may contain an ultraviolet ray screening agent. The first layer (including the case of single-layered resin film) may contain an ultraviolet ray screening agent. It is preferred that the second layer contain an ultraviolet ray screening agent. It is preferred that the third layer contain an ultraviolet ray screening agent. By the use of an ultraviolet ray screening agent, even when the resin film and the glass-plate-containing laminate are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

It is preferred that the ultraviolet ray screening agent be an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. It is preferred that the ultraviolet ray screening agent be an ultraviolet ray screening agent having a benzotriazole structure, or an ultraviolet ray screening agent having a benzophenone structure. It is preferred that the ultraviolet ray screening agent be an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of a layer containing the ultraviolet ray screening agent (a first layer, a second layer, or a third layer), the content of the ultraviolet ray screening agent is preferably 0.1% by weight or more, more preferably 0.2% by weight or more, further preferably 0.3% by weight or more, especially preferably 0.5% by weight or more. In 100% by weight of a layer containing the ultraviolet ray screening agent (a first layer, a second layer, or a third layer), the content of the ultraviolet ray screening agent is preferably 2.5% by weight or less, more preferably 2% by weight or less, further preferably 1% by weight or less, especially preferably 0.8% by weight or less. When the content of the ultraviolet ray screening agent is the above-described lower limit or more and the above-described upper limit or less, deterioration in visible light transmittance after a lapse of a period is further suppressed. In particular, by setting the content of the ultraviolet ray screening agent to be 0.2% by weight or more in 100% by weight of a layer containing the ultraviolet ray screening agent, with regard to a laminate containing a resin film and glass plates, the lowering in visible light transmittance thereof after a lapse of a certain period of time can be significantly suppressed.

### (Oxidation inhibitor)

It is preferred that the resin film contain an oxidation inhibitor. It is preferred that the first layer (including the case of single-layered resin film) contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenolic oxidation inhibitor include 2,6-di-t-butyl-p-cresol (BHT), butyl hydroxyanisole (BHA), 2,6-di-t-butyl-4-ethylphenol, and stearyl-β-(3,5-di-t-butyl-4-hydroxyphenyl)propionate. One kind or two or more kinds among these oxidation inhibitors are preferably used.

Examples of the phosphorous oxidization inhibitor include tridecyl phosphite, tris(tridecyl)phosphite, triphenyl phosphite, trinonylphenyl phosphite, bis(tridecyl)pentaerythritol diphosphite, and bis(decyl)pentaerythritol diphosphite. One kind or two or more kinds among these oxidation inhibitors are preferably used.

It is preferred that the content of the oxidation inhibitor be 0.1% by weight or more in 100% by weight of the resin film or in 100% by weight of the layer containing the oxidation inhibitor (a first layer, a second layer or a third layer). In this case, it is possible to maintain the high visible light transmittance of the resin film and the glass-plate-containing laminate for a long period.

### (Other ingredients)

Each of the resin film, the first layer, the second layer, and the third layer may contain other ingredient as necessary. Examples of the other ingredient include a coupling agent containing silicon, aluminum or titanium, a dispersant, a surfactant, a flame retardant, an antistatic agent, a filler, a pigment, a dye, adhesive force regulating agent, a moisture-resistance improving agent, a fluorescent brightening agent, and an infrared ray absorber. One kind of the other ingredient may be used alone, and two or more kinds thereof may be used in combination.

For controlling the shear storage modulus within a preferred range, the resin film, the first layer, the second layer, and the third layer may contain a filler. Examples of the filler include calcium carbonate particles, silica particles, and the like. From the viewpoint of effectively enhancing the flexural rigidity, and effectively suppressing deterioration in transparency, silica particles are preferred.

In 100% by weight of the layer containing a filler (first layer, second layer, or third layer), the content of the filler is preferably 1% by weight or more, more preferably 5% by weight or more, further preferably 10% by weight or more, and is preferably 60% by weight or less, more preferably 50% by weight or less.

### (Other details of resin film)

It is preferred that the resin film be a resin film to be used while it is bonded to a glass plate.

The thickness of the resin film is not particularly limited. From the viewpoint of the practical aspect and the viewpoint of sufficiently enhancing the penetration resistance and the flexural rigidity of the glass-plate-containing laminate, the thickness of the resin film is preferably 0.1 mm or more, more preferably 0.25 mm or more, and is preferably 3 mm or less, more preferably 1.5 mm or less. When the thickness of the resin film is the above lower limit or more, the penetration resistance and the flexural rigidity of the glass-plate-containing laminate are further enhanced. When the thickness of the resin film is the above upper limit or less, the transparency of the resin film is further improved.

The resin film may be a resin film having a uniform thickness, and may be a resin film having varying thickness. The sectional shape of the resin film may be a rectangular shape and may be a wedge-like shape.

The production method of the resin film according to the present invention is not particularly limited. In the case of a single-layered resin film, examples of the production method of the resin film according to the present invention include a method of extruding a resin composition with an extruder. In the case of a multi-layered resin film, examples of the production method of the resin film according to the present invention include a method of separately forming resin compositions used for constituting respective layers into respective layers, and then, for example, layering the obtained layers, a method of coextruding resin compositions used for constituting respective layers with an extruder and layering the layers, and the like. A production method of extrusion-molding is preferred because the method is suitable for continuous production.

It is preferred that the second layer and the third layer contain the same polyvinyl acetal resin. This case realizes excellent production efficiency of the resin film. For the reason of excellent production efficiency of the resin film, it is preferred that the second layer and the third layer contain the same polyvinyl acetal resin and the same plasticizer. For the reason of excellent production efficiency of the resin film, it is further preferred that the second layer and the third layer be formed of the same resin composition.

It is preferred that the resin film have protrusions and recesses on at least one surface of the surfaces of both sides. It is more preferred that the resin film have protrusions and recesses on surfaces of both sides. Examples of the method for forming the protrusions and recesses include, but are not particularly limited to, a lip emboss method, an emboss roll method, a calender roll method, and a profile extrusion method. The emboss roll method is preferred because a large number of embosses of a protrusion and recess shape, which is a quantitatively constant protrusion and recess pattern, can be formed.

### (Glass-plate-containing laminate)

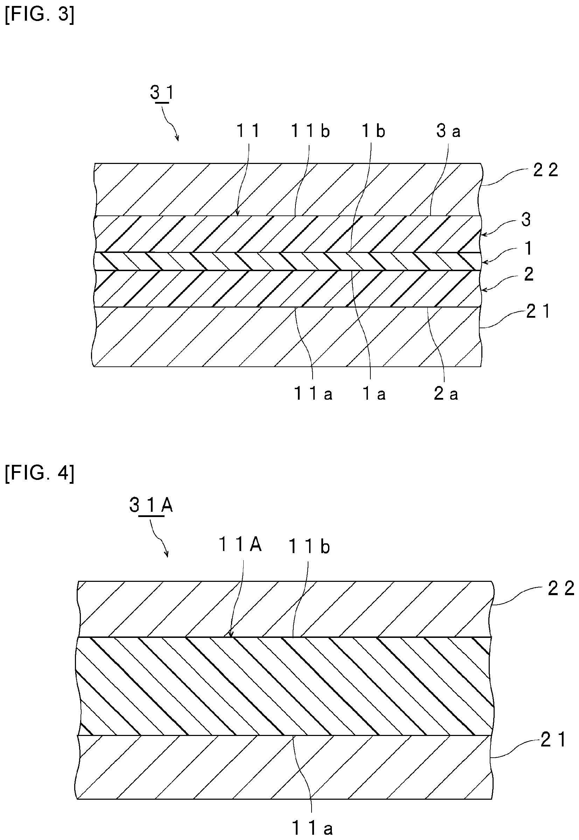

Fig. 3 is a sectional view schematically showing an example of a glass-plate-containing laminate prepared with the resin film shown in Fig. 1.

A glass-plate-containing laminate 31 shown in Fig. 3 includes a first lamination glass member 21, a second lamination glass member 22 and the resin film 11. The resin film 11 is arranged and sandwiched between the first lamination glass member 21 and the second lamination glass member 22.

The first lamination glass member 21 is layered on a first surface 11a of the resin film 11. The second lamination glass member 22 is layered on a second surface 11b opposite to the first surface 11a of the resin film 11. The first lamination glass member 21 is layered on an outer surface 2a of the second layer 2. The second lamination glass member 22 is layered on an outer surface 3a of a third layer 3.

Fig. 4 is a sectional view schematically showing an example of a glass-plate-containing laminate prepared with the resin film shown in Fig. 2.

A glass-plate-containing laminate 31A shown in Fig. 4 includes a first lamination glass member 21, a second lamination glass member 22 and the resin film 11A. The resin film 11A is arranged and sandwiched between the first lamination glass member 21 and the second lamination glass member 22.

The first lamination glass member 21 is layered on the first surface 11a of the resin film 11A. The second lamination glass member 22 is layered on the second surface 11b opposite to the first surface 11a of the resin film 11A.

As described above, it suffices that the glass-plate-containing laminate according to the present invention includes a first glass plate, and a resin film according to the present invention. It is preferred that the resin film be arranged between the first lamination glass member (first glass plate) and the second lamination glass member.

In the glass-plate-containing laminate according to the present invention, it is preferred that the resin film be bonded to the first glass plate. In the glass-plate-containing laminate according to the present invention, it is preferred that the resin film be bonded to the first glass plate, and the resin film be bonded to the second lamination glass member.

It is preferred that the first lamination glass member be the first glass plate. It is preferred that the second lamination glass member be the second glass plate.

Examples of the lamination glass member include a glass plate, a PET (polyethylene terephthalate) film, and the like. As the glass-plate-containing laminate, laminated glass in which a resin film is sandwiched between a glass plate and a PET film or the like, as well as laminated glass in which a resin film is sandwiched between two glass plates, is included. The glass-plate-containing laminate is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, and is preferably 5 mm or less, more preferably 3 mm or less. When the lamination glass member is a glass plate, the thickness of the glass plate is preferably 0.5 mm or more, more preferably 0.7 mm or more. When the lamination glass member is a glass plate, the thickness of the glass plate is preferably 5 mm or less, more preferably 3 mm or less, still more preferably 2.3 mm or less, further preferably 2.1 mm or less, still further preferably 2.0 mm or less, yet still further preferably 1.8 mm or less, especially preferably 1.6 mm or less, most preferably 1.4 mm or less. When the lamination glass member is tempered glass, the thickness of the glass plate may be 0.5 mm or more, or may be 0.7 mm or more. When the lamination glass member is tempered glass, the thickness of the glass plate is preferably 1 mm or less, or may be 0.7 mm or less. When the lamination glass member is a PET film, the thickness of the PET film is preferably 0.03 mm or more and is preferably 0.5 mm or less.

The thickness of the glass-plate-containing laminate is preferably 2 mm or more, and is preferably 10 mm or less, more preferably 6 mm or less, further preferably 5 mm or less, especially preferably 4 mm or less, most preferably 3 mm or less.

The method for producing the glass-plate-containing laminate is not particularly limited. For example, the resin film is sandwiched between the first lamination glass member and the second lamination glass member, and then, passed through pressure rolls or subjected to decompression suction in a rubber bag, so that the air remaining between the first and the second lamination glass members and the resin film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, a glass-plate-containing laminate can be obtained. At the time of producing the glass-plate-containing laminate, a first layer, a second layer, and a third layer may be layered.

Each of the resin film and the glass-plate-containing laminate can be used for automobiles, railway vehicles, aircraft, ships, buildings and the like. Each of the resin film and the glass-plate-containing laminate can also be used for applications other than these applications. It is preferred that the resin film and the glass-plate-containing laminate be a resin film and a glass-plate-containing laminate for vehicles or for building respectively, and it is more preferred that the resin film and the glass-plate-containing laminate be a resin film and a glass-plate-containing laminate for vehicles respectively. Each of the resin film and the glass-plate-containing laminate can be used for a windshield, side glass, rear glass or roof glass of an automobile, and the like. The resin film and the glass-plate-containing laminate are suitably used for automobiles. The resin film is used for obtaining a glass-plate-containing laminate of automobile.

When the laminated glass is used, the aforementioned laminated glass can be attached to the opening so that the first lamination glass member is situated on the exterior space side and the second lamination glass member is situated on the interior space side in the building or in the vehicle. The laminated glass can be used in the condition of being attached to the opening.

In the glass-plate-containing laminate of automobile, the thickness of the lamination glass member may differ on the vehicle exterior side and on the vehicle interior side. The thickness of the lamination glass member on the vehicle exterior side is preferably 0.5 mm or more, more preferably 0.7 mm or more, further preferably 1.0 mm or more, especially preferably 1.5 mm or more. The thickness of the lamination glass member on the vehicle exterior side is preferably 5 mm or less, more preferably 3 mm or less, still more preferably 2.3 mm or less, further preferably 2.1 mm or less, still further preferably 2.0 mm or less, yet still further preferably 1.8 mm or less, especially preferably 1.6 mm or less. The thickness of the lamination glass member on the vehicle interior side is preferably 0.5 mm or more, more preferably 0.7 mm or more. the thickness of the lamination glass member on the vehicle interior side is preferably 3 mm or less, more preferably 2.3 mm or less, still more preferably 2.1 mm or less, further preferably 2.0 mm or less, still further preferably 1.8 mm or less, yet still further preferably 1.6 mm or less, yet still further preferably 1.4 mm or less, especially preferably 1.0 mm or less, most preferably 0.7 mm or less.

Hereinafter, the present invention will be described in more detail with reference to examples and comparative examples. The present invention is not limited only to these examples.

The following materials were prepared.

### (Example 1)

### Preparation of composition for forming resin film (first layer):

The following ingredients were blended to obtain a composition for forming a resin film.

Polyvinyl acetate (polymerization degree 3500, available from Celanese Corporation) 100 parts by weight
Dibutyl adipate (DBA) 40 parts by weight
Compound represented by the following formula (11) 20 parts by weight

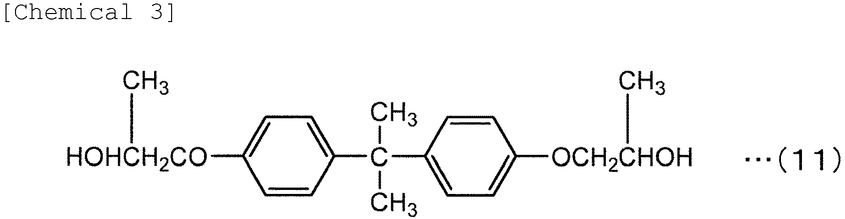

### Preparation of resin film:

By extruding a composition for forming a resin film with an extruder, a resin film (thickness: 800 µm) was prepared.

### (Example 2)

A resin film was obtained in the same manner as in Example 1 except that 20 parts by weight of the compound represented by the formula (11) was changed to 70 parts by weight of the compound represented by the following formula (12), and the blending amount of DBA was changed to 55 parts by weight.

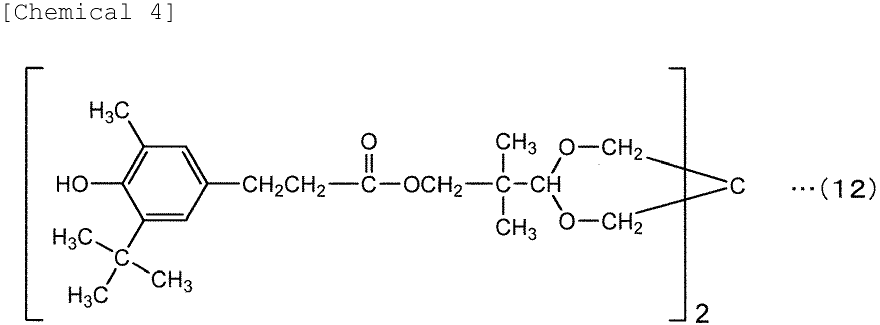

### (Example 3)

A resin film was obtained in the same manner as in Example 1 except that 20 parts by weight of the compound represented by the formula (11) was changed to 50 parts by weight of bisphenol A represented by the following formula (13) .

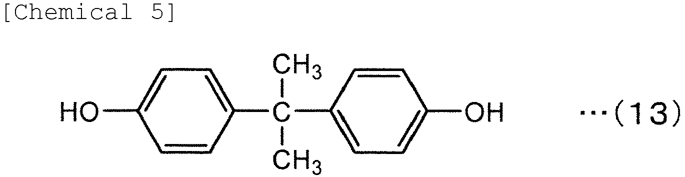

### (Comparative Example 1)

A resin film was obtained in the same manner as in Example 1 except that 20 parts by weight of the compound represented by the formula (11) was changed to 70 parts by weight of the compound represented by the following formula (101), and the blending amount of DBA was changed to 55 parts by weight.

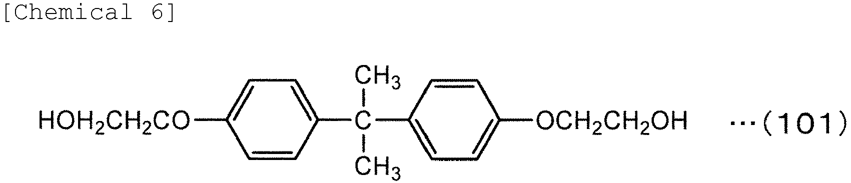

### (Comparative Example 2)

A resin film was obtained in the same manner as in Example 1 except that 20 parts by weight of the compound represented by the formula (11) was changed to 50 parts by weight of the compound represented by the following formula (102).

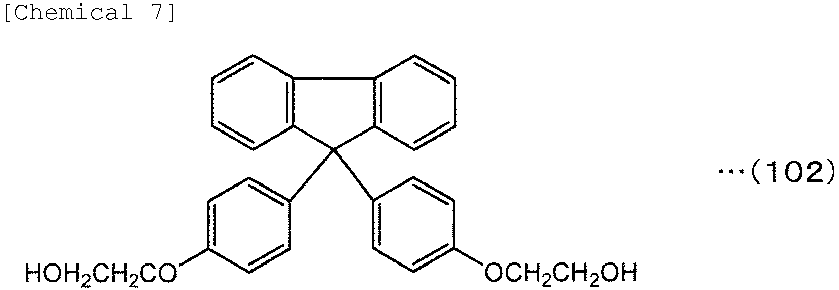

### (Comparative Example 3)

A resin film was obtained in the same manner as in Example 1 except that the compound represented by the formula (11) was not used, and the plasticizer was changed to 50 parts by weight of acetyl tributyl citrate (ATBC).

### (Example 4)

### Preparation of (meth)acryloyl polymer (1):

A mixture was obtained by mixing 100 parts by weight of benzyl acrylate (Viscoat #160, BzA, available from OSAKA ORGANIC CHEMICAL INDUSTRY LTD.) and 0.2 parts by weight of 2,2-dimethoxy-1,2-diphenylethan-1-one ("IRGACURE 184", available from BASF). Then in the condition that spacers each having a particle diameter of 100 µm were inserted into the periphery of two PET sheets (one-side mold-releasable, 50 µm thick, available from Nippa Corporation), the obtained mixture was poured between the two PET sheets to form a polymerizable composition layer. Then, the polymerizable composition layer was irradiated with ultraviolet rays at a dose of 3000 mJ/cm² with a high pressure mercury UV lamp to obtain a (meth)acryloyl polymer (1).

### Preparation of composition for forming resin film (first layer):

The following ingredients were blended to obtain a composition for forming a resin film.

(Meth)acryloyl polymer (1) 100 parts by weight
Triethylene glycol di-2-ethylhexanoate (3GO): 40 parts by weight
Compound represented by the following formula (14) 30 parts by weight

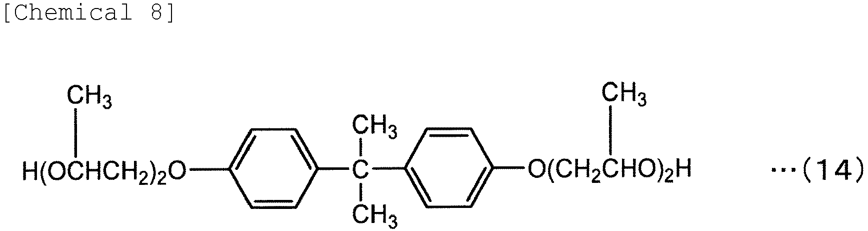

### Preparation of resin film:

By extruding a composition for forming a resin film with an extruder, a resin film (thickness: 800 µm) was prepared.

### (Example 5)

### Preparation of (meth)acryloyl polymer (2):

A mixture was obtained by mixing 100 parts by weight of (2-methyl-2-ethyl-1,3-dioxolane-4-yl)methylacrylate ("MEDOL-10", available from OSAKA ORGANIC CHEMICAL INDUSTRY LTD.) and 0.2 parts by weight of 2,2-dimethoxy-1,2-diphenylethan-1-one ("IRGACURE 184", available from BASF). Then in the condition that spacers each having a particle diameter of 100 µm were inserted into the periphery of two PET sheets (one-side mold-releasable, 50 µm thick, available from Nippa Corporation), the obtained mixture was poured between the two PET sheets to form a polymerizable composition layer. Then, the polymerizable composition layer was irradiated with ultraviolet rays at a dose of 3000 mJ/cm² with a high pressure mercury UV lamp to obtain a (meth)acryloyl polymer (2) .

A resin film was obtained in the same manner as in Example 4 except that in the composition for forming a resin film, the (meth)acryloyl polymer (1) was changed to the (meth)acryloyl polymer (2), and 3GO was not added.

### (Example 6)

### Preparation of modified polyvinyl acetate (3):

A glass polymerization vessel equipped with a reflux condenser, a dropping funnel, a thermometer, and a nitrogen inlet was prepared. This polymerization vessel was charged with 100 parts by weight of vinyl acetate monomer, 1.0 part by weight of ethylene glycol monovinylether (HEVE), and 3.8 parts by weight of methanol, and heated and stirred, and the interior atmosphere of the polymerization vessel was replaced by nitrogen. Then the inner temperature of the polymerization vessel was controlled to 60°C, and 0.02 parts by weight of tert-butylperoxy neodecanate which is a polymerization initiator, 150 parts by weight of vinyl acetate monomer, and 1.5 parts by weight of ethylene glycol monovinylether (HEVE) were dropped over 4 hours, and polymerized for 1 hour after end of the dropping, and thus a solution containing modified polyvinyl acetate (3) was obtained. The solution was dried for 3 hours in an oven at 110°C to obtain polyvinyl acetate (3). In the modified polyvinyl acetate (3), the percentage of the structural unit derived from HEVE was 0.4% by mole, and the molecular weight was 700000.

A resin film was obtained in the same manner as in Example 4 except that in the composition for forming a resin film, the (meth)acryloyl polymer (1) was changed to the modified polyvinyl acetate (3), and the plasticizer was changed to bis(2-butoxyethyl) adipate (D931).

### (Comparative Example 4)

A resin film was obtained in the same manner as in Example 4 except that the (meth)acryloyl polymer (1) was changed to a polyvinyl acetal resin (average polymerization degree of 1700, using n-butyl aldehyde, content of hydroxyl group of 30% by mole, acetylation degree of 1% by mole, acetalization degree of 69% by mole), and the blending amount of 3GO was changed to 30 parts by weight.

### (Evaluation of single-layered resin film)

### (1) Sound insulating property (maximum value of peak of tanδ on low temperature side)

The obtained resin film was punched into a circular shape of 8 mm in diameter. For this resin film, dynamic viscoelasticity was measured in the condition of a strain of 1% and a frequency of 1 Hz at a temperature rising speed of 5°C/min. according to a shear method using a leometer ("ARES" available from Leometrix). The maximum value (maximal value) of loss tangent appearing on the lowest temperature side was measured.

In Comparative Example 2, the resin film was very fragile, and could not be punched into a circular shape, so that the measurement was impossible.

### (2) Transparency (Haze value)

For the obtained resin film, a haze value was measured using a haze meter ("TC-HIIIDPK" available from Tokyo Denshoku Co., Ltd.) in accordance with JIS K6714.

The details and the results are shown in the following Table 1.

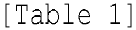

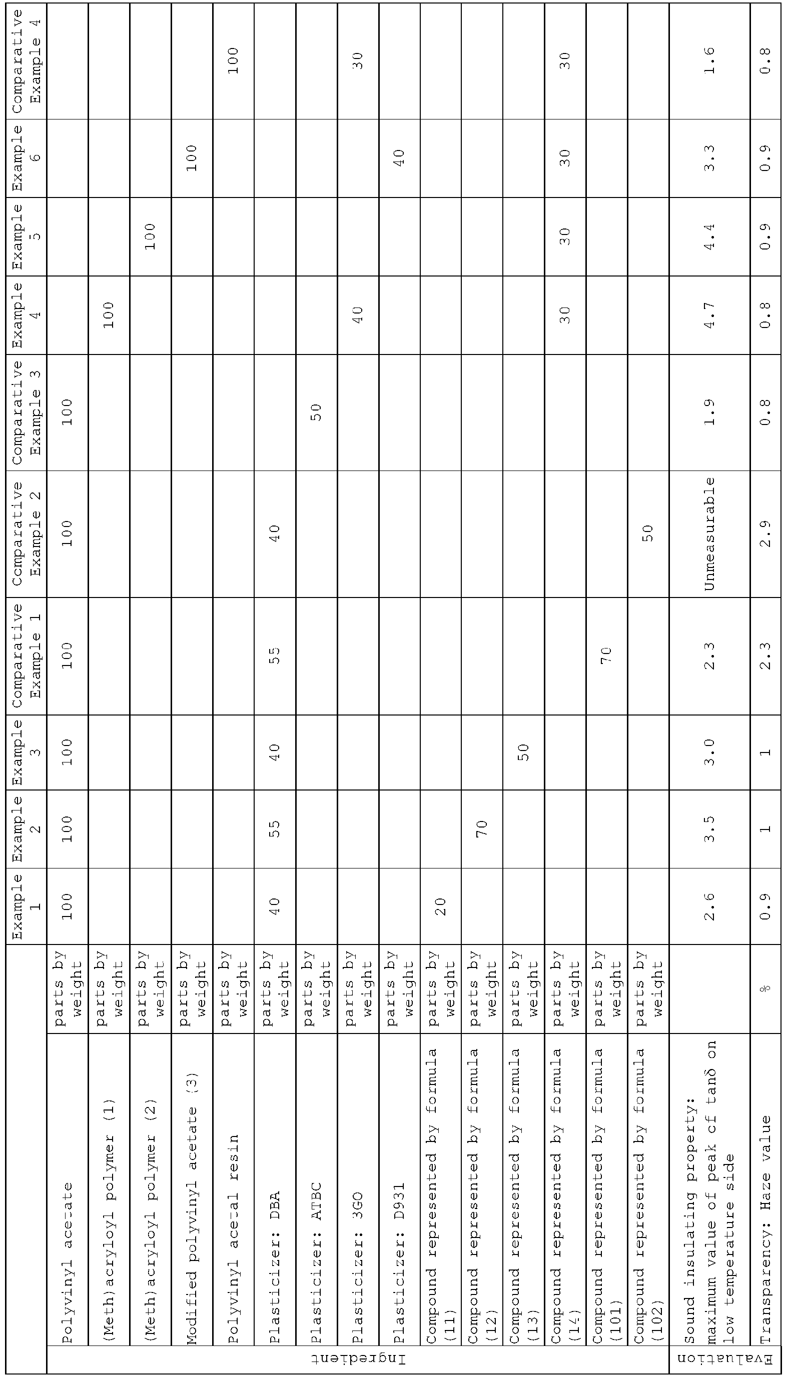

### (Example 7)

### Composition for forming first layer:

A composition for forming a first layer obtained in Example 1 was prepared.

### Preparation of composition for forming second layer and third layer:

The following ingredients were blended to obtain a composition for forming a second layer and a third layer.

Polyvinyl acetal resin (average polymerization degree: 1700, using n-butyl aldehyde, content of hydroxyl group: 30.7% by mole, acetylation degree: 0.8% by mole, acetalization degree 68.5% by mole) 100 parts by weight
Dibutyl adipate (DBA) 37.5 parts by weight
An amount that is a metal element concentration (Mg concentration) of 70 ppm in the obtained resin film of a Mg mixture (50 : 50 (weight ratio) mixture of magnesium 2-ethylbutyrate and magnesium acetate)
An amount that is 0.2% by weight in the obtained resin film of an ultraviolet ray screening agent (2-(2-hydroxy-3-t-butyl-5-methylphenyl)-5-chlorobenzotriazole)
An amount that is 0.2% by weight in the obtained resin film of an oxidation inhibitor (2,6-di-t-butyl-p-cresol)

### Preparation of resin film:

By coextruding the composition for forming a first layer and a composition for forming a second layer and a third layer using a coextruder, a resin film (800 µm in thickness) having a layered structure with a stack of a second layer (350 µm in thickness) /a first layer (100 µm in thickness)/a third layer (350 µm in thickness) was prepared.

### Preparation of laminated glass:

The obtained resin film was cut into a size of 30 cm long × 2.5 cm wide. As the first lamination glass member, and the second lamination glass member, two glass plates (clear glass, 30 cm long × 2.5 cm wide) were prepared. The resin film was sandwiched between the two glass plates to obtain a laminate. The laminate was put into a rubber bag and the interior of the bag was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass.

### (Examples 8 to 12 and Comparative Examples 5 to 8)

A resin film and laminated glass were obtained in the same manner as that in Example 7 except that the following change was made.

Example 8: The composition for forming a first layer was changed to the composition for forming a first layer obtained in Example 2.

Example 9: The composition for forming a first layer was changed to the composition for forming a first layer obtained in Example 3.

Example 10: The composition for forming a first layer was changed to the composition for forming a first layer obtained in Example 4. In the composition for forming a second layer and a third layer, the plasticizer was changed to 37.5 parts by weight of 3GO.

Example 11: The composition for forming a first layer was changed to the composition for forming a first layer obtained in Example 5. In the composition for forming a second layer and a third layer, the plasticizer was changed to 37.5 parts by weight of 3GO.

Example 12: The composition for forming a first layer was changed to the composition for forming a first layer obtained in Example 5. In the composition for forming a second layer and a third layer, the plasticizer was changed to 37.5 parts by weight of D931.

Comparative Example 5: The composition for forming a first layer was changed to the composition for forming a first layer obtained in Comparative Example 1.

Comparative Example 6: The composition for forming a first layer was changed to the composition for forming a first layer obtained in Comparative Example 2.

Comparative Example 7: The composition for forming a first layer was changed to the composition for forming a first layer obtained in Comparative Example 3.

Comparative Example 8: The composition for forming a first layer was changed to the composition for forming a first layer obtained in Comparative Example 4. In the composition for forming a second layer and a third layer, the plasticizer was changed to 37.5 parts by weight of 3GO.

### (Evaluation of multi-layered resin film)

For a multilayered resin film, the same evaluation as for the single-layered resin film was conducted. The resin films of Examples 7 to 12 include the first layer having the same composition as in Examples 1 to 5. Therefore, the resin films of Examples 7 to 12 were excellent in sound insulating property and transparency in comparison with the resin films of Comparative Examples 5 to 8.

### EXPLANATION OF SYMBOLS

- 1:: First layer
- 1a:: First surface
- 1b:: Second surface
- 2:: Second layer
- 2a:: Outer surface
- 3:: Third layer
- 3a:: Outer surface
- 11:: Resin film
- 11A:: Resin film (first layer)
- 11a:: First surface
- 11b:: Second surface
- 21:: First lamination glass member
- 22:: Second lamination glass member
- 31:: Glass-plate-containing laminate
- 31A:: Glass-plate-containing laminate

## Claims

1. A resin film having a one-layer structure or a two or more-layer structure, the resin film comprising:
a first layer containing polyvinyl acetate or a (meth)acryloyl polymer, and a compound having two or more hydroxyl groups,
the hydroxyl group in the compound having two or more hydroxyl groups being a secondary or tertiary alcoholic hydroxyl group or a phenolic hydroxyl group.

2. The resin film according to claim 1, wherein when the first layer contains the polyvinyl acetate, the first layer contains a plasticizer.

3. The resin film according to claim 1 or 2, wherein
the first layer contains the polyvinyl acetate, and
the polyvinyl acetate has a polymerization degree of 1500 or more and 10000 or less.

4. The resin film according to any one of claims 1 to 3, wherein
the first layer contains the polyvinyl acetate, and
in the first layer, a content of the compound having two or more hydroxyl groups relative to 100 parts by weight of the polyvinyl acetate is 10 parts by weight or more and 100 parts by weight or less.

5. The resin film according to any one of claims 1 to 4, wherein the first layer contains the (meth)acryloyl polymer.

6. The resin film according to claim 5, wherein the first layer contains the (meth)acryloyl polymer and a plasticizer.

7. The resin film according to any one of claims 1 to 6, comprising a second layer containing a thermoplastic resin and a plasticizer, wherein
the second layer is arranged on a first surface side of the first layer.

8. The resin film according to claim 7, comprising a third layer containing a thermoplastic resin and a plasticizer, wherein
the third layer is arranged on a second surface side opposite to the first surface side of the first layer.

9. The resin film according to any one of claims 1 to 8, which is to be used while being bonded to a glass plate.

10. A glass-plate-containing laminate comprising:
a first glass plate; and
the resin film according to any one of claims 1 to 9,
the resin film being bonded to the first glass plate.

11. The glass-plate-containing laminate according to claim 10, comprising:
the first glass plate as a first lamination glass member;
the resin film; and
a second lamination glass member, wherein
the resin film is bonded to the first glass plate,
the resin film is bonded to the second lamination glass member, and
the resin film is arranged between the first glass plate and the second lamination glass member.
